# NEUE EUROPÄISCHE PATENTSCHRIFT

(11) **EP 0 808 333 B2**
(45) Veröffentlichungstag und Bekanntmachung des Hinweises auf die Entscheidung über den Einspruch: **23.10.2002**
(45) Hinweis auf die Patenterteilung: 09.09.1998
(21) Anmeldenummer: 96900524.8
(22) Anmeldetag: 19.01.1996
(51) Int. Cl.: C08F 2/24, C09D 157/00

(54) **MIKROGEL**
MICROGEL
MICROGEL

(30) Priorität: 07.02.1995 DE 19504015
(43) Veröffentlichungstag der Anmeldung: 26.11.1997
(73) Patentinhaber: Bollig & Kemper GmbH & Co. KG, 50827 Köln (DE)
(72) Erfinder: HILLE, Hans-Dieter, D-51467 Bergisch Gladbach (DE); NEIS, Stephan, D-50259 Pulheim (DE); MÜLLER, Horst, D-51069 Köln (DE)
(74) Vertreter: Brandenburg, Thomas, Dr.
(86) Internationale Anmeldenummer: DE9600067
(87) Internationale Veröffentlichungsnummer: WO96024619

(56) Entgegenhaltungen:
- EP-A- 0 226 171
- WO-A-93/00376
- DE-A- 2 811 913
- GB-A- 2 159 161
- JP-A- 80 112 216
- US-A- 4 090 991
- US-A- 4 414 357

## Beschreibung

Die Erfindung betrifft neuartige Mikrogele, ein Verfahren zur Herstellung sowie deren Verwendung.

Mikrogele sind vernetzte Polymermikroteilchen in einem flüssigen Medium mit einem mittleren Teilchendurchmesser zwischen 0,01 und 10 µm, die durch Emulsionspolymerisation von Vinylmonomeren mit Divinylmonomeren in Gegenwart von Emulgatoren erhalten werden. Solche Mikrogele auf Wasserbasis werden als Rheologiehilfsmittel oder als Hilfsmittel zur Ausbildung eines guten Metalleffekts in der Automobilindustrie verwendet.
Ein wesentlicher Nachteil dieser so erhaltenen Mikrogele besteht in dem Verbleib des Emulgators im fertigen Mikrogel, da letzteres, beispielsweise aufgrund der im Emulgator vorhandenen schwefelhaltigen Gruppierungen (Sulfonsäuregruppen), so für eine Vielzahl von Anwendungen nur mit erheblichen Nachteilen eingesetzt werden kann. So haben solche Mikrogele aufgrund des in ihnen enthaltenen Emulgators nachteilige Eigenschaften, beispielsweise im Hinblick auf deren Verwendung in Wasserbasislacken in der Automobilindustrie, insbesondere hinsichtlich der Wasserlagerung und Schwitzwasserbeständigkeit.
Durch Emulsionspolymerisation erhältliche Mikrogele können aber auch durch Umarbeitung in konventionellen Lacken, d.h. auf Lösemittelbasis, Verwendung finden. Hierzu ist es notwendig, das wäßrige Mikrogel in eine lösemittelhaltige Form zu überführen.
Dies geschieht mittels des industriell häufig eingesetzten Koagulationsverfahrens, wie es beispielsweise in der WO-91/00895 und der EP-A-029 637 beschrieben ist. Hierzu wird der wäßrigen Mikrogeldispersion n-Butanol zugesetzt, wodurch eine Koagulation des Mikrogels hervorgerufen wird. Danach wird die untere, n-Butanol, Wasser und Teile des Emulgators enthaltende Phase abgetrennt und die obere, das Mikrogel, n-Butanol und Restwasser enthaltende Phase durch Zugabe eines Lösemittels und/oder einer Trägerharzlösung unter Vakuum azeotrop vom Restwasser befreit. Dieses Verfahren hat den Nachteil, daß die Koagulation, und damit die Abtrennung des Wassers, nicht oder nur schlecht stattfindet, wenn der Festkörpergehalt der wäßrigen Mikrogeldispersion oberhalb 20 Gew.-% liegt. Dadurch fallen größere Mengen n-Butanol gesättigten Wassers an, die mit erheblichem Aufwand fachgerecht entsorgt werden müssen. Daneben verbleiben nicht unerhebliche Mengen an Emulgator in dem in lösemittelhaltiger Phase vorliegendem Mikrogel, was wiederum die oben genannten Nachteile mit sich bringt.

Aufgabe der Erfindung ist es, einerseits ein Mikrogel und andererseits ein Verfahren bereitzustellen, das die oben angegebenen Nachteile nicht aufweist

Diese Aufgabe wird erfindungsgemäß durch das in Anspruch 1 definierte Mikrogel gelöst.

Das emulgatorfreie Mikrogel wird hergestellt, in dem man in wäßriger Phase eine Monomerenmischung aus mindestens einer ethylenisch monofunktionellen Verbindung und mindestens einer ethylenisch di- oder multifunktionellen Verbindung in Gegenwart eines Polyesters polymerisiert.

Der Polyester, der keine schwefelhaltigen Gruppen enthält, fungiert hierbei als Trägerharz und, beispielsweise hinsichtlich der Verwendung des fertigen Mikrogels in einem Basislack für die Automobilindustrie, als Bindemittel. Folglich enthält das erfindungsgemäße Mikrogel keine die spätere Verwendung nachteilig beeinflussenden Komponenten (Emulgatoren).
Unter einer ethylenisch mono-, di-oder multifunktionellen Verbindung versteht man hier alle Verbindungen, die eine, zwei bzw. mehrere vinylische und/oder allylische Kohlenstoff-Kohlenstoffdoppelbindung(en) aufweisen.
in der vorliegenden Endung werden als ethylenisch monofunktionelle Verbindung Alkylester der Acryl- und Methacrylsäure, wie z.B. Methyl(meth)acrylat, Ethyl(meth)-acrylat, Propyl(meth)acrylat, Butyl(meth)acrylat, Ethylhexyl(meth) acrylat, Hydroxyalkyl(meth)acrylate, wie Hydroxyethyl(meth)acrylat, Hydroxypropyl(meth)acrylat, Hydroxybutyl(meth) acrylat, Hydroxyhexyl(meth)acrylat sowie deren Isomere; vinylische Aromaten, wie z.B. Styrol, α-Methylstyrol, Vinyltoluol, Vinylnaphthalin; Vinylester wie z.B. Vinylacetat, Vinylester von synthetischen Fettsäuren, wie z.B. VeoVa® 9, VeoVa® 10 der Fa. Shell-Chemie.
Unter dem Begriff "(Meth)acryl" werden hier und im folgenden sowohl Derivate der Acryl- als auch der Methacrylsäure verstanden.

Styrol, Butylacrylat, Methylmethacrylat und/oder Hydroxypropylmethacrylat sind bevorzugte vinylische Verbindungen.

In einer weiteren erfindungsgemäßen Ausführungsform werden als ethylenisch di- oder multifunktionelle Verbindung Di- oder Tri(meth)acrylate von polyfunktionellen Alkoholen, wie z.B. Ethylenglykoldi(meth)acrylat, Propylenglykol (meth)acrylat, Butandioldi(meth)acrylat, Hexandioldi(meth)acrylat, Trimethylolpropantri(meth)acrylat; und/ oder Allyl (meth)acrylat verstanden.

Der erfindungsgemäß zu verwendende Polyester ist ein Polykondensationsprodukt aus mindestens einem Polyol und einer Polycarbonsäure, Hydroxycarbonsäure, Hydroxypolycarbonsäure und/oder Polyhydroxypolycarbonsäure. Gemäß einer besonderen Form der Erfindung wird das Polyol aus der Gruppe von 1,6-Hexandiol, Neopentylglykol, 1 ,4-Dimethylolcyclohexan, Hydroxypivalinsäureneopentylglykolester (HPN), perhydriertem Bisphenol-A, Trimethylolpropan, Trimethylolpropan ausgewählt.

Es werden Adipinsäure, Phthalsäure, Isophthalsäure, Hexahydrophthalsäure, Tetrahydrophthalsäure, Trimellithsäure, Dimethylolpropionsäure und deren möglichen Anhydride; und/oder dimeren Fettsäuren wie z.B. Pripol® 1009 der Firma UNICHEMA ausgewählt.
Dieser Polyester kann ein mittleres Molekulargewicht von 500 bis 10.000, vorzugsweise 700 bis 5.000, insbesondere von 750 bis 2.000 (g/mol); eine Säurezahl zwischen 10 und 250, vorzugsweise zwischen 25 und 200, insbesondere zwischen 15 und 180 (mg KOH/g Harz); und eine OH-Zahl von 20 bis 250, vorzugsweise von 30 bis 200 (mg KOH/g Harz), aufweisen.
Der Polyester enthält keine schwefelhaltigen Gruppierungen und ist nach den bekannten Methoden in eine wasserverdünnbare Form zu überführen.
In einer bevorzugten Ausführungsform trägt der Polyesters mindestens zwei Carboxylgruppen pro Molekül.

Das auf diese Weise erhältliche erfindungsgemäße Mikrogel kann insbesondere für wäßrige Beschichtungszusammensetzungen verwendet werden.
Eine bervorzugte Verwendungsform der Erfindung ist der Einsatz in wäßrigen Basislacken, insbesondere Effektbasislacken und Klarlacken, für die Decklackierung bzw. Lackierung von Automobilen. Die erfindungsgemäßen Mikrogele verleihen diesen wäßrigen Beschichtungszusammensetzungen ein ausgezeichnetes Applikationsverhalten und hervorragende dekorative Eigenschaften, die sich beispielsweise anhand eines ausgeprägten Metalleffekts, einer sehr guten Resistenz gegen Ablaufen in der Vertikalen (SCA - Sagging Control Agent), Wolkenfreiheit, Resistenz gegen Wiederanlösen durch Klarlack, gute Schleifriefenabdeckung und der Erfüllung der in der Automobilindustrie üblichen Eigenschaftsvorgaben, wie z.B. gemäß FORD-Spezifikation Haftungsprüfung nach BI 106-02 und Steinschlagprüfung nach BI 157-04, zeigen.
So können die erfindungsgemäßen Mikrogele ebenso gut für die Herstellung von wäßrigen Klarlacken, Einbrennlacken für industrielle Anwendungen sowie Anstrichfarben für den Bautensektor verwendet werden.

Um zu Mikrogelen in nicht-wäßriger Phase zu gelangen, muß den erfindungsgemäßen, in wäßriger Phase vorliegenden Mikrogelen, entsprechend einer besonderen Ausführungsform der Erfindung, das Wasser entzogen werden.
Dies kann durch jedes bekannte Verfahren, beispielsweise durch Sprühtrocknen, Gefriertrocknen oder Eindampfen, gegebenenfalls unter vermindertem Druck, geschehen.
Nach dem Wasserentzug kann das erfindungsgemäße Mikrogel in Pulverform oder als harzartige Masse vorliegen.

Gemäß einer besonders bevorzugten Variante der Erfindung wird das in wäßriger Phase vorliegende Mikrogel in eine flüssige organische Phase überführt. Dies kann durch eine azeotrope Destillation geschehen. Hierbei kann man so verfahren, daß die wäßrige Mikrogeldispersion bei erhöhter Temperatur, gegebenenfalls unter vermindertem Druck, kontinuierlich oder diskontinuierlich in einen Reaktor gegeben wird, der ein Schleppmittel, d.h. ein Lösemittel oder ein Gemisch mehrerer Lösemittel, von denen mindestens eines ein Azeotrop mit Wasser bildet, enthält.
Der Reaktor ist mit einer geeigneten Kondensierungsvorrichtung und einem Wasserabscheider mit Rücklauf zum Reaktor ausgestattet. Nach Erreichen der Siedetemperatur des Azeotropes steigt die gasförmige azeotrope Phase (d.h. Schleppmittel und Wasser) in die Kondensierungsvorrichtung auf. Dort kondensiert das Azeotrop und läuft von dort in den Wasserabscheider. Im Wasserabscheider erfolgt eine Phasentrennung zwischen dem Schleppmittel und dem Wasser. Bei einer kontinuierlich durchgeführten azeotropen Destillation fließt das Schleppmittel wieder zurück in den Reaktor, so daß nur geringe Mengen an Schleppmittel eingesetzt werden müssen. Das aus dem Wasserabscheider erhaltene Wasser ist frei von organischen Bestandteilen und kann erneut zur Herstellung der erfindungsgemäßen wäßrigen Mikrogeldispersion eingesetzt werden.
Das Schleppmittel kann aus der Gruppe von Xylol, Butylacetat, Methylisobutylketon, Methylamylketon, Pentanol, Hexanol oder Ethylhexanol ausgewählt sein.

Ein wesentlicher Vorteil hierbei ist, daß das Schleppmittel nach erfolgter Überführung in die organische Phase dortverbleibt und für die Verwendung lösemittelhaltiger Beschichtungszusammensetzungen von Vorteil ist. Hinsichtlich der weiteren Verwendung dieser in organischen Phase vorliegenden Mikrogele zur Herstellung von Iösemittelhaltigen Beschichtungszusammensetzungen handelt es sich bei den genannten Schleppmitteln um geeignete Lösemittel.
Dieses Verfahren zeichnet sich aufgrund der gleichzeitigen Wiederverwendung des Schleppmittels und des anfallenden Wassers ohne zusätzliche Verfahrensschritte durch ein außerordentliches Maß an Umweltverträglichkeit aus, da keine zu entsorgende Nebenprodukte entstehen, die im Vergleich mit bekannten Herstellungsverfahren in großen Mengen anfallen.

In einer besonderen Form der azeotropen Destillation wird diese dergestalt durchgeführt, daß die wäßrige Mikrogeldispersion in ein Gemisch eines Schleppmittels und einem hochsiedenden, organischen Lösemittel gegeben wird. Dieses hochsiedende, organische Lösemittel verhindert während der Überführung in die organische Phase ein Anbacken des Mikrogels an der Wand des Reaktors.
Das hochsiedende Lösemittel kann aus der Gruppe der Glykolester, wie z.B. Butylglykolacetat und/oder Butyldiglykolacetat ausgewählt sein.
Wie im Falle des Schleppmittels handelt es sich bei dem hochsiedenden Lösemittel ebenfalls um eine für eine lösemittelhaltige Beschichtungszusammensetzung übliche Komponente.

Das auf diese Weise erhältliche erfindungsgemäße Mikrogel kann insbesondere für lösemittelhaltige Beschichtungszusammensetzungen verwendet werden.
Eine bevorzugte Verwendungsform der Erfindung ist der Einsatz in Iösemittelhaltigen Basislacken, insbesondere Effektbasislacken und Klarlacken, für die Decklackierung bzw. Lackierung von Automobilen.

Dieses in organischer Phase vorliegende erfindungsgemäße Mikrogel verleiht diesen lösemittelhaltigen Beschichtungszusammensetzungen ebenfalls ein ausgezeichnetes Applikationsverhalten und hervorragende dekorative Eigenschaften, die sich beispielsweise anhand eines ausgeprägten Metalliceffekts, einer sehr guten Resistenz gegen Ablaufen in der Vertikalen (SCA - Sagging Control Agent), Wolkenfreiheit, Resistenz gegen Wiederanlösen durch Klarlack, gute Schleifriefenabdekkung und der Erfüllung der in der Automobilindustrie üblichen Eigenschaftsvorgaben zeigen. Die erfindungsgemäßen Mikrogele können ebenso gut für die Herstellung von lösemittelhaltigen Klarlacken, Coil-Coatingzusammen setzungen und Einbrennlacken für industrielle Anwendungen sowie Anstrichfarben für den Bautensektor verwendet werden.

Desweiteren werden in der vorliegenden Erfindung Verfahren zur Herstellung der erfindungsgemäßen Mikrogele beansprucht.
Ein erfindungsgemäßes Verfahren zur Herstellung eines in wäßriger Phase vorliegenden Mikrogels besteht darin, daß in wäßriger Phase eine Monomerenmischung aus mindestens einer ethylenisch monofunktionellen Verbindung und einer ethylenisch di- oder multifunktionellen Verbindung in Gegenwart eines Polyesters polymerisiert wird.
Ein weiteres erfindungsgemäßes Verfahren zur Herstellung eines in organischen Lösemitteln vorliegenden Mikrogels zeichnet sich dadurch aus, daß es folgende Verfahrensschritte enthält:
- Herstellung eines in wäßriger Phase vorliegenden Mikrogels nach dem oben genannten Verfahren,
- azeotrope Destillation mit einem Schleppmittel, gegebenenfalls in Gegenwart eines oder mehrerer hochsiedenden Lösemittel und unter vermindertem Druck,
- Wiederverwendung des abgetrennten Schleppmittels und des Wassers.

Diese erfindungsgemäßen Verfahren zeichnen sich insbesondere durch hohe Wirtschaftlichkeit und hohe Umweltverträglichkeit aus.

### BEISPIEL 1 (Vergleichsbeispiel)

### Mikrogeiherstellung mit Emulgator gemäß EP-A-029 637

a) Herstellung einer wäßrigen Mikrogeldispersion:
   In einem thermostatisierten Doppelwandgefäß werden 1935 g deionisiertes Wasser und als Emulgator 22,8 g Aerosol 501 (Cyanamid) bei 82 °C vorgelegt. Unter Rühren wird eine gerührte Präemulsion aus 674 g deionisiertem Wasser, 33,3 g Aerosol 501, 400 g Hexandioldiacrylat, 80 g Hydroxypropylmethacrylat und 319 g Methylmethacrylat innerhalb von 3 Stunden zugegeben.
   Parallel läßt man innerhalb von 4 Stunden eine Initiatorlösung aus 9,5 g Ammoniumperoxodisulfat und 328 g deionisiertem Wasser zutropfen. Nach erfolgter Reaktion erhält man eine wäßrige Mikrogeldispersion mit einem Feststoffgehalt von 20 %.
b) Herstellung einer nichtwäßrigen Mikrogeldispersion durch Koagulation:
   736 g der unter a) hergestellten Mikrogeldispersion werden unter Rühren mit 228 g n-Butanol versetzt. Nach 4 Stunden haben sich 2 Phasen gebildet, von denen die untere Phase, bestehend aus 640 g mit n-Butanol gesättigten Wassers, abgelassen wird. Der das Mikrogel enthaltende Überstand wird mit 82 g Trägerharz in Form eines verzweigten Polyester, hergestellt aus Neopentylglykol, Trimethylolpropan und Adipinsäure (Molverhältnis 7:2:8), mit einer Säurezahl von 18, 50 % in Butylacetat und 290 g Butylacetat versetzt. Unter Vakuum wird bei 70 °C das Restwasser, das restliche Butanol und Butylacetat azeotrop entfernt. Man erhält eine nicht-wäßrige Mikrogeldispersion mit einem Feststoffgehalt von 49 % und einem Wassergehalt nach Karl-Fischer-Titration von 0,08 %.
c) Herstellung eines wäßrigen Metallic-Basislackes unter Verwendung des Mikrogels aus Beispiel 1a:
   600 g der unter 1a hergestellten wäßrigen Mikrogeldispersion werden mit DMEA auf einen pH-Wert von 8,00 eingestellt, anschließend mit einer Mischung aus 30 g des unter Beispiel 3a hergestellten Polyesters, 6 g DMEA und 114 g vollentsalztem Wasser, einer Mischung aus 35 g eines handelsüblichen Acrylatverdickers (Latekoll® D der Firma BASF) und 55 g vollentsalztem Wasser, 19 g eines handelsüblichen Melaminharzes (Cymel® 327 der Firma Dyno Cytec), 6 g Dimethylethanolamin, 48 g einer handelsüblichen Aluminiumbronze, vorher angeteigt in 46 g Butylglykol und 21 g n-Butanol und 310 g deionisiertem Wasser, zu einem Lack verarbeitet.
   Der so erhaltene Wasserbasislack besitzt eine Spritzviskosität von 45 s (DIN-Becher mit 4 mm-Düse nach DIN 53211, 23 °C), einen Festkörpergehalt von 16 % und einen pH-Wert von 8,00.
d) Herstellung eines lösemittelhaltigen Effekt-Basislackes unter Verwendung des Mikrogels aus Beispiel 1b)
   97 Gew.-Teile eines verzweigten Polyesterharzes, hergestellt aus Neopentylglykol, Trimethylolpropan, Isophthalsäure und Adipinsäure (Molverhältnis 7:2:5:3) mit einer Säurezahl von 19, 50 % in Butylacetat, 51 Gew.-Teile einer 30 %-igen Lösung von Celluloseacetobutyrat (CAB 321-01) in Butylacetat und 33,3 Gew.-Teile einer 15 %igen Lösung aus Celluloseacetobutyrat (CAB 381-2) in Butylacetat, 32,4 Gew.-Teile einer 60 %-Lösung eines n-butanolveretherten Melaminharzes in Butanol, 18,6 Gew.-Teile eines 97 %-igen Hexamethoxymethyl-Melaminharzes, einer Aluminiumanteigung, bestehend aus 24 Gew.-Teilen einer handelsüblichen Aluminiumbronze, 15 Gew.-Teilen Xylol und 15 Gew.-Teilen Butylacetat; 71 Gew.-Teilen einer handelsüblichen 8 %-igen Wachs-Dispersion sowie 7 Gew.-Teilen Xylol, 7 Gew.-Teilen Tetralin®, 100 Gew.-Teilen Butylacetat, 32 Gew.-Teilen der nicht-wäßrigen Mikrogeldispersion aus Beispiel 1b) und 29 Gew.-Teilen Butylglykolacetat werden zu einem Lack verarbeitet.

Der so erhaltene Basislack besitzt eine Spritzviskosität von 22 s (DIN-Becher mit 4 mm-Düse nach DIN 53211, 23 °C), einen Festkörper von 19 Gew.-% und wird durch Spritzapplikation auf handelsübliche Stahlbleche, die mit einem handelsüblichen Automobilserienfüller geprimert sind, mit einer Schichtdicke von 15 bis 18µm aufgebracht und nach 3 Minuten Ablüftzeit anschließend mit einem handelsüblichen Automobilserienklarlack (aus DE-OS 39 19 028, Vergleichsbeispiel 1b) mit einer Trockenfilmdicke von 40 µm bis 45 µm versehen und 25 Minuten bei 140 °C eingebrannt.

### BEISPIEL 2

a) Herstellung eines Polyesters:
   In einem 2 Liter-4-Halskolben mit Rührer, Füllkörperkolonne und Thermoelement werden 142 g 1,6-Hexandiol, 42 g Neopentylglykol, 322 g Dimethylolpropionsäure, 409 g Adipinsäure und 59 g Phthalsäureanhydrid bei 130 °C aufgeschmolzen und durch stufenweise Steigerung der Temperatur von 130 °C bis 200 °C innerhalb von 6 Stunden bis zum Erreichen einer Säurezahl von 156 polykondensiert. Der so erhaltene Polyester besitzt ein mittleres Molgewicht von 1081, eine Säurezahl von 156 und eine OH-Zahl (mg KOH/g Harz) von 104.
b) Herstellung einer erfindungsgemäßen wäßrigen Mikrogeldispersion:
   605 g deionisiertes Wasser, 253 g des unter a) hergestellten Polyesters und 51 g Dimethylethanolamin werden mit einer Monomerenmischung bestehend aus 379 g Butylacrylat, 163 g Methylmethacrylat, 89 g Styrol, 38 g Hydroxypropylmethacrylat und 29 g Allylmethacrylat gemischt und in eine rührbare Dosierungsvorrichtung gegeben. Innerhalb von 3 Stunden tropft man diese Mischung unter Rühren in ein auf 82 thermostatisiertes Doppelwandgefäß, in dem 600 g deionisiertes Wasser vorgelegt wurden. Parallel tropft man aus einem Tropftrichter innerhalb von 4 Stunden eine Lösung von 2g Ammoniumperoxodisulfat in 250 g deionisiertem Wasser als Initiator hinzu. Man erhält eine Mikrogeldispersion mit einem Feststoffgehalt von 40 %.
c) Herstellung einer erfindungsgemäßen nicht-wäßrigen Mikrogeldispersion:
   392 g Butylacetat und 240 g Butylglykolacetat werden in einem beheizbaren Doppelwandgefäß, ausgerüstet mit Rührer, Wasserabscheider, Intensivkühler und Tropftrichter, vorgelegt und auf 80 °C aufgeheizt. Unter vermindertem Druck (500 mPa) werden innerhalb von 4 Stunden 368 g der unter b) hergestellten wäßrigen Mikrogeldispersion zugetropft. Dabei destilliert kontinuierlich ein Azeotrop aus Butylacetat und Wasser über. Nach erfolgter Zudosierung erhält man eine nicht-wäßrige Mikrogeldispersion mit einem Feststoffgehalt von 19% sowie 221 g Wasser aus dem Wasserabscheider. Der Wassergehalt der Dispersion beträgt nach Bestimmung durch Karl-Fischer-Titration 0,06 %.
d) Herstellung eines lösemittelhaltigen Effekt-Basislackes unter Verwendung des erfindungsgemäßen Mikrogels aus Beispiel 2c) 98 Gew.-Teile eines verzweigten Polyesterharzes, hergestellt aus Neopentylglykol, Trimethylolpropan, Isophthalsäure und Adipinsäure (Molverhältnis 7:2:5:3) mit einer Säurezahl von 19, 50 % in Butylacetat, 51 Gew.-Teile einer 30 %-igen Lösung von Celluloseacetobutyrat (CAB 321-0,1) in Butylacetat und 33,3 Gew.-Teile einer 15 %-igen Lösung aus Celluloseacetobutyrat (CAB 381-2) in Butylacetat, 32,4 Gew.-Teile einer 60 %igen Lösung eines n-butanolveretherten Melaminharzes in Butanol, 18,6 Gew.-Teile eines 97 %-igen Hexamethoxymethyl-Melaminharzes, eine Aluminiumanteigung, bestehend aus 24 Gew.-Teilen einer handelsüblichen Aluminiumbronze, 15 Gew.-Teilen Xylol und 15 Gew.-Teilen Butylacetat; 71 Gew.-Teilen einer handelsüblichen 8 %igen Wachs-Dispersion sowie 7 Gew.-Teilen Xylol, 7 Gew.-Teilen Tetralin®, 100 Gew.-Teilen Butylacetat, 82 Gew.-Teilen der erfindungsgemäßen nicht-wäßrigen Mikrogeldispersion aus Beispiel 2c) und 29 Gew.-Teilen Butylglykolacetat werden zu einem Lack verarbeitet. Der so erhaltene Basislack besitzt eine Spritzviskosität von 22 s (DIN-Becher mit 4 mm-Düse nach DIN 53211, 23 °C), einen Festkörper von 19 Gew.-% und wird durch Spritzapplikation auf handelsübliche Stahlbleche, die mit einem handelsüblichen Automobilserienfüller geprimert sind, mit einer Schichtdicke von 15 bis 18 µm aufgebracht und nach 3 Minuten Ablüftzeit anschließend mit einem handelsüblichen Automobilserienklarlack (aus DE-OS 39 19 028, Vergleichsbeispiel 1b) mit einer Trockenfilmdicke von 40 µm bis 45 µm versehen und 25 Minuten bei 140 °C eingebrannt.

### BEISPIEL 3:

a) Herstellung eines Polyesters:
   In einem 21 Reaktionsgefäß mit Rührer und Füllkörperkolonne werden 26 g Neopentylglykol, 560 g Pripol® 1009, 335 g Dimethylolpropionsäure und 154 g Hexahydrophthalsäureanhydrid eingewogen und so aufgeheizt, daß die Kolonnenkopftemperatur 100 °C nicht überschreitet Die maximale Veresterungstemperatur beträgt 190 °C. Bei einer Säurezahl von 124 wird abgekühlt.
   Man erhält einen Polyester mit einem berechneten mittleren Molekulargewicht von 2030 und einer Hydroxylzahl von 69.
b) Herstellung einer erfindungsgemäßen wäßrigen Mikrogeldispersion:
   In einem 4 I Reaktionsgefäß mit Rührer, Rückflußkühler und 2 Zulaufgefäßen werden 1300 g entionisiertes Wasser eingewogen. In dem einen der beiden Zulaufgefäße wird eine Preemulsion bestehend aus 875 g entionisiertem Wasser, 51 g Dimethylethanolamin, 258 g Polyester aus Beispiel 4a, 199 g Butylacrylat, 99 g Methylmethacrylat, 40 g Styrol, 358 g Hydroxypropylmethacrylat und 77 g Allylmethacrylat eingewogen und gemischt. In dem anderen Zulaufgefäß wird die initiatorlösung bestehend aus 2,4 g Ammoniumperoxodisulfat und 220 g entionisiertem Wasser eingewogen und gemischt.
   Ansonsten wird so verfahren wie in der Herstellung der wäßrigen Mikrogeldispersion 3b.
   Man erhält eine Mikrogeldispersion mit einem Feststoffgehalt von 30 % und einem pH-Wert von 7,35. Das Polymere hat eine Säurezahl von 31 und eine Hydroxylzahl von 152.
c) Herstellung eines wäßrigen Metallicbasislackes:
   383 g der wäßrigen Mikrogeldispersion aus Beispiel 4b, eine Mischung aus 22 g eines handelsüblichen Acrylatverdickers (Latekoll® D der Firma BASF) und 80 g vollentsalztem Wasser, 14 g eines handelsüblichen Melaminharzes (Cymel® 327 der Firma Dyno Cytec), 5 g Dimethylethanolamin, 36 g einer handelsüblichen Aluminiumbronze vorher angeteigt in 35 g Butylglykol und 16 g n-Butanol und 390 g entionisiertes Wasser werden zu einem Lack verarbeitet.
   Der so erhaltene Wasserbasislack besitzt eine Spritzviskosität von 45 s (DIN-Becher mit 4 mm-Düse nach DIN 53211, 23 °C), einen Festkörperanteil von 16 % und einen pH-Wert von 8,20.

### Anwendung; Prüfung der Wasserlagerung und des Steinsehlags gemäß Prüfnormen der Automobilindustrie

Die Basislacke aus den Beispielen 1 bis 5 werden durch Spritzapplikation auf handelsübliche Stahlbleche, die mit einem handelsüblichen Automobilserienfüller geprimert sind, mit einer Schichtdicke von 15 bis 18 µm in einer klimatisierten Spritzkabine aufgebracht und nach 5 Minuten Ablüftzeit abschließend mit einem handelsüblichen Automobilserienklarlack mit einer Trockenfilmdicke von 40 bis 45 µm versehen und 25 Minuten bei 140 °C eingebrannt.
Das Vergleichsbeispiel 1.c zeigt keinen Metalliceffekt. Bei allen anderen Beispielen erhält man eine gleichmäßige wolkenfreie und hochglänzende Lackschicht mit einem brillianten Metalliceffekt.

Die Wasserlagerung wurde gemäß der FORD-Spezifikation BI 104-1; 240 Stunden bei 32 °C; Benotung m 0 bis m 5 für die Blasenhäufigkeit; g 0 bis g 5 für die Größe der Blasen bestimmt.
Die Beurteilung des Verhaltens gegenüber Steinschlag erfolgte nach der FORD-Spezifikation BI 157-4; Vergleich nach Schadensbildern; Rating 0 bis 7).

Die Ergebnisse der Tests sind in der folgenden Tabelle zusammengefaßt:

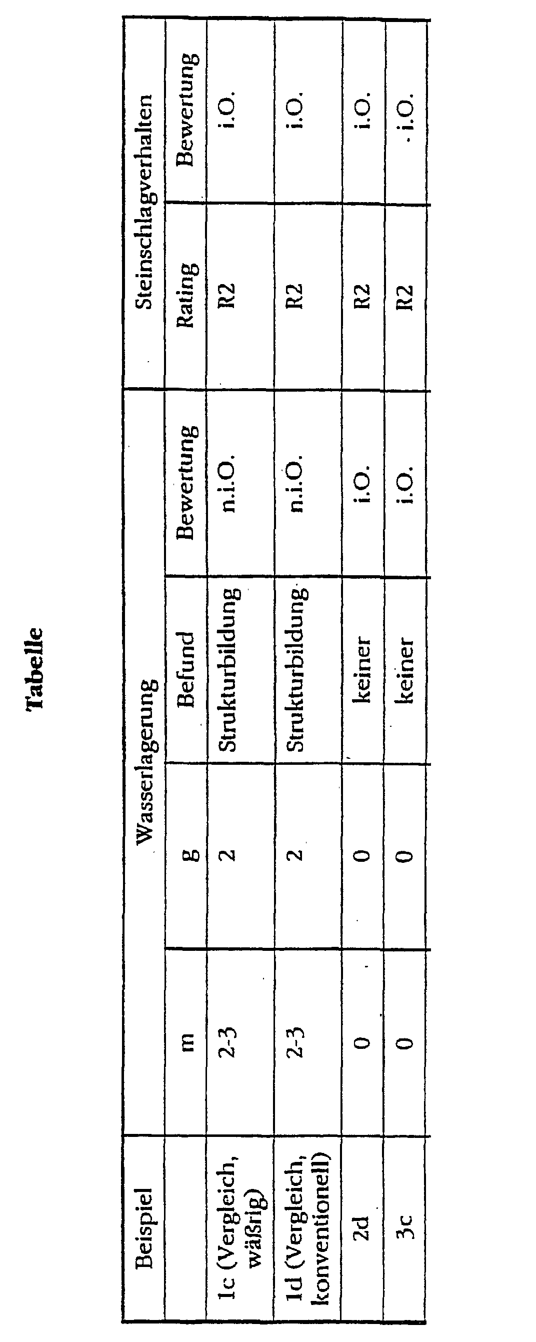

## Patentansprüche

1. Emulgatorfreies Mikrogel, erhältlich durch Polymerisation in wäßriger Phase einer Monomerenmischung aus mindestens einer ethylenisch monofunktionellen Verbindung, ausgewählt aus der Gruppe von Methyl(meth)acrylat, Ethyl(meth)-acrylat, Propyl(meth)acrylat, Butyl(meth)acrylat, Ethylhexyl(meth)acrylat, Hydroxyethyl(meth)acrylat, Hydroxypropyl(meth)acrylat, Hydroxybutyl(meth)acrylat, Hydroxyhexyl(meth)acrylat sowie deren Isomere; Styrol, α-Methylstyrol, Vinyltoluol, Vinylnaphthalin; Vinylacetat, Vinylester von synthetischen Fettsäuren, und mindestens einer ethylenisch di- oder multifunktionellen Verbindung, angewählt aus der Gruppe der Diacrylate, Triacrylate und/oder (Meth)acrylsäureestern von polyfunktionellen Alkoholen, in Gegenwart eines Polyesters ohne schwefelhallige Gruppen aus Adipinsäure, Phthalsäure, Isophthalsäure, Hexahydrophthalsäure, Tetrahydrophthalsäure, Trimellithsäure, Dimethylolpropionsäure oder deren möglichen Anhydriden, und dimeren Fettsäuren sowie einem Polyol aus der Gruppe von 1,6-Hexandiol, Neopentylglykol, 1,4-Dimethylolcyclohexan, Hydroxypivalinsäureneopentylglykolester (HPN), perhydriertem Bisphenol-A, Trimethylolpropan.

2. Mikrogel nach Anspruch 1, **dadurch gekennzeichnet, daß** der Polyester ein mittleres Molgewicht von 500 bis 10.000, vorzugsweise von 700 bis 5.000, insbesondere von 750 bis 2.000; eine Säurezahl zwischen 10 und 250, vorzugsweise zwischen 25 und 200, insbesondere zwischen 50 und 180; und eine OH-Zahl von 20 bis 250, vorzugsweise von 30 bis 200, hat.

3. Mikrogel nach einem der vorhergehenden Ansprüche, **dadurch gekennzeichnet, daß** jedes Polyestermolekül mindestens 2 Carboxylgruppen trägt.

4. Mikrogel nach einem der vorhergehenden Ansprüche, **dadurch gekennzeichnet, daß** es zusätzlich in eine wasserfreie Form überführt wird.

5. Mikrogel nach Anspruch 4, **dadurch gekennzeichnet, daß** es durch Wasserentzug, beispielsweise durch Sprühtrocknen, Gefriertrocknen oder Eindampfen, gegebenenfalls unter vermindertem Druck, in eine wasserfreie Form überführt wird.

6. Mikrogel nach einem dervorhergehenden Ansprüche, **dadurch gekennzeichnet, daß** es in eine flüssige organische Phase überführt wird.

7. Mikrogel nach Anspruch 6, **dadurch gekennzeichnet, daß** es durch azeotrope Destillation, insbesondere durch kontinuierliche azeotrope Destillation, in eine organische Phase übertührt wird.

8. Mikrogel nach Anspruch 7, **dadurch gekennzeichnet, daß** die azeotrope Destillation mit einem Schleppmittel in Gegenwart eines oder mehrerer hochsiedender Lösemittel, gegebenenfalls unter vermindertem Druck, durchgeführt wird.

9. Mikrogel nach Anspruch 7 oder 8, **dadurch gekennzeichnet, daß** das Schleppmittel Butylacstat, Xylol, Pentanol, Hexanol, Ethylhexanol, Butylacetat, Methylisobutylketon oder Methylamylketon ist.

10. Mikrogel nach Anspruch 8 oder 9, **dadurch gekennzeichnet, daß** das hochsiedende Lösemittel Butylglykolacetat oder Butyldiglykolacetat ist.

11. Verfahren zur Herstellung eines in wässriger Phase vorliegenden Mikrogels nach einem der Ansprüche 1 bis 3, **dadurch gekennzeichnet, daß** in wäßriger Phase eine Monomerenmischung aus mindestens einer ethylenisch monofunktionellen Verbindung, ausgewählt aus der Gruppe von Methyl(meth)acrylat, Ethyl(meth)-acrylat, Propyl(meth)acrylat, Buyl(meth)acrylat, Ethylhexyl(meth)acrylat, Hydroxyethyl(meth)acrylat, Hydroxypropyl(meth)acrylat, Hydroxybutyl(meth)acrylat, Hydroxyhexyl(meth)acrylat sowie deren Isomere; Styrol, α-Methylstyrol, Vinyltoluol, Vinylnaphthalin; Vinylacatat, Vinylester von synthetischen Fettsäuren, und mindestens einer ethylenisch di- oder multifunktionellen Verbindung, augewählt aus der Gruppe der Diacrylate, Triacrylate und/oder (Meth)acrylsäureestern von polyfunktionellen Alkoholen, in Gegenwert eines Polyesters ohne schwefelhaltige Gruppen aus Adipinsäure, Phthalsäure, Isophthalsäure, Hexahydrophthalsäure, Tetrahydrophthalsäure, Trimellithsäure, Dimethylolpropionsäure oder deren möglichen Anhydriden, und dimeren Fettsäuren sowie einem Polyol aus der Gruppe von 1,6-Hexandiol, Neopentylglykol, 1,4-Dimethylolcyclohexan, Hydroxypivalinsäureneopentylglykolester (HPN), perhydriertem Bisphenol-A, Trimethylolpropan polymerisiert wird.

12. Verfahren zur Herstellung eines in organischen Lösemitteln vorliegenden Mikrogels nach einem der Ansprüche 4 bis 10, **dadurch gekennzeichnet, daß** es folgende Verfahrensschritte enthält:
• Herstellung eines in wässriger Phase vorliegenden Mikrogels nach Anspruch 11,
• azeotrope Destillation mit einem Schleppmittel, gegebenenfalls in Gegenwart eines oder mehrerer hochsiedender Lösemittel und unter vermindertem Druck,
• Wiederverwendung des abgetrennten Schleppmittels und des Wassers.

13. Verwendung eines Mikrogels nach einem der Ansprüche 1 bis 3 für wässrige oder lösemittelhaltige Beschichtungszusammensetzungen.

14. Verwendung eines Mikrogels nach Anspruch 13 für wässrige oder lösemittelhaltige Basislacke, Effaktbasislacke oder Klarlacke in der Automobilindustrie.

## Claims

1. A microgel without emulsifier obtained by polymerization in an aqueous phase of a monomer blend comprising at least one ethylenic monofunctional compound, selected from the group consisting of methyl(meth)-acrylate, ethyl(meth)-acrylate, propyl(meth)-acrylate, butyl(meth)-acrylate, ethylhexyl(meth)-acrylate, hydroxyethyl(meth)-acrylate, hydroxypropyl(meth)-acrylate, hydroxybutyl(meth)-acrylate, hydroxyhexyl(meth)-acrylate and isomers thereof; styrene, α-methylstyrene, vinyltoluene, vinylnaphthalene; vinylacetate, vinylic esters of synthetic fatty acids, and at least one ethylenic di- or multifunctional compound, selected from the group consisting of diacrylates, triacrylates and/or (meth)acrylic acid esters of polyfunctional alcohols, in the presence of a polyester having no sulfur containing group being synthesized from compounds selected from group of adipinic acid, phthalic acid, isophthalic acid, hexahydrophthalic acid, tetrahydrophthalic acid, trimellitic acid, dimethylolpropionic acid or a possible anhydride of the afore mentioned acids, and dimer fatty acids, and a polyol compound selected from the group consisting of 1,6-hexanediol, neopentyl glycol, 1,4-dimethylolcyclohexane, hydroxypivalic acid neopentylglycol ester, perhydrogenated bisphenol-A and trimethylolpropane.

2. A microgel according to claim 1, **characterized in that** the polyester has an average molecular weight of from 500 to 10,000, preferably from 700 to 5,000, in particular from 750 to 2,000; an acid number of from 10 to 250, preferably from 25 to 200, in particular from 50 to 180; and a OH number of from 20 to 250, preferably from 30 to 200.

3. A microgel of any of the preceding claims, **characterized in that** each polyester molecule exhibits at least 2 carboxylic groups.

4. A microgel of any of the preceding claims, **characterized in that** it is additionally converted into an anhydrous form.

5. A microgel according to claim 4, **characterized in that** it is converted into an anhydrous form by dehydration, for example, by spray drying, freeze drying or vaporization, if desired, under reduced pressure.

6. A microgel of any of the preceding claims, **characterized in that** it is converted into a liquid organic phase.

7. A microgel of claim 6, **characterized in that** it is converted into an organic phase by azeotropic distillation, in particular by continuous azeotropic distillation.

8. A microgel of claim 7, **characterized in that** the azeotropic distillation is conducted with an entrainer in the presence of one or a plurality of high boiling solvents, if desired, under reduced pressure.

9. A microgel of claim 7 or 8, **characterized in that** the entrainer is butyl acetate, xylene, pentanol, hexanol, ethylhexanol, butyl acetate, methylisobutyl ketone or methylamyl ketone.

10. A microgel of claim 8 or 9, **characterized in that** the high boiling solvent is butyl glycol acetate or butyl diglycol acetate.

11. A method of manufacturing a microgel present in an aqueous phase of any of the claims 1 to 3, **characterized by** polymerizing in aqueous phase a monomer blend comprising at least one ethylenic monofunctional compound, selected from the group consisting of methyl(meth)-acrylate, ethyl(meth)-acrylate, propyl(meth)-acrylate, butyl(meth)-acrylate, ethylhexyt(meth)-acrylate, hydroxyethyl(meth)-acrylate, hydroxypropyl(meth)-acrylate, hydroxybutyl(meth)-acrylate, hydroxyhexyl(meth)-acrylate and isomers thereof; styrene, α-methylstyrene, vinyltoluene, vinylnaphthalene; vinylacetate, vinylic esters of synthetic fatty acids, and at least one ethylenic di- or multifunctional compound, selected from the group consisting of diacrylates, triacrylates and/or (meth)acrylic acid esters of polyfunctional alcohols, in the presence of a polyester having no sulfur containing group being synthesized from compounds selected from group of adipinic acid, phthalic acid, isophthalic acid, hexahydrophthalic acid, tetrahydrophthalic acid, trimellitic acid, dimethylolpropionic acid or a possible anhydride of the afore mentioned acids, and dimer fatty acids, and a polyol compound selected from the group consisting of 1,6-hexanediol, neopentyl glycol, 1,4-dimethylolcyclohexane, hydroxypivalic acid neopentylglycol ester, perhydrogenated bisphenol-A and trimethylolpropane.

12. A method of manufacturing a microgel present in organic solvents of any of the claims 4 to 10, **characterized by** the following process steps:
• preparation of a microgel present in an aqueous phase according to claim 11,
• azeotropic distillation with an entrainer, if desired, in the presence of one or a plurality of high boiling solvents and under reduced pressure,
• recycling the separated entrainer and the water.

13. The use of a microgel of any of the claims 1 to 3 for water-borne or solvent-containing coating compositions.

14. The use of a microgel according to claim 13, for water-borne or solvent-containing basecoats, effect basecoats or clearcoats in the motorcar industry.

## Revendications

1. Microgel sans émulsifiant pouvant être obtenu par polymérisation en phase aqueuse d'un mélange monomère à base d'au moins un composé monofonctionnel éthylènique choisi parmi le groupe formé par le (méth)acrylate méthylique, le (méth)acrylate éthylique, le (méth)acrylate propylique, le (méth)acrylate butylique, le (méth)acrylate éthylhexylique, le (méth)acrylate d'hydroxyéthyle, le (méth)acrylate d'hydroxypropyle, le (méth)acrylate d'hydroxybutyle, le (méth)acrylate d'hydroxyhexyle et les composés isomères desquels, styrène, styrène α-méthylique, toluène vinylique, naphtalène vinylique, l'acétate vinylique, les esters vinylique des acides gras synthétiques, et d'au moins un composé difonctionnel ou multifonctionnel éthylénique choisi parmi le groupe formé par les diacrylates, triacrylates et/ou les esters de l'acide (méth)acrylique des alcools polyfonctionnels, en présence d'un polyester sans groupes sulfuriques de l'acide adipique, l'acide phtalique, l'acide isophtalique, l'acide hexahydrophtalique, l'acide tétrahydrophtalique, l'acide trimellitique, l'acide diméthylol-propionique ou de leurs anhydrides potentiels et des acides gras dimères et un polyol choisi parmi le groupe formé par l'hexanediol-I,6, le néopentylglycol, le cyclohexanediméthylol-1,4, l'ester néopentylglycol de l'acide d'hydroxypivaline (HPN), le bisphénol A perhydraté, le triméthylolpropane.

2. Microgel selon la revendication 1, **caractérisé en ce que** le polyester a une masse molaire moyenne comprise entre 500 et 10 000, de préférence entre 700 et 5 000 et tout particulièrement entre 750 et 2 000; un indice d'acidité situé entre 10 et 250, de préférence entre 25 et 200 et tout particulièrement entre 50 et 180; et un indice OH compris entre 20 et 250, de préférence entre 30 et 200.

3. Microgel selon l'une des revendications précédentes, **caractérisé en ce que** chaque molécule de polyester porte au moins 2 groupes carboxyliques.

4. Microgel selon l'une des revendications précédentes, **caractérisé en ce qu'**il est en outre transformé en une forme anhydre.

5. Microgel selon la revendication 4, **caractérisé en ce qu'**il est transformé en une forme anhydre par déshydratation, par exemple par séchage par pulvérisation, par lyophilisation ou par évaporation, le cas échéant à pression réduite.

6. Microgel selon l'une des revendications précédentes, **caractérisé en ce qu'**il est transformé en une phase organique liquide.

7. Microgel selon la revendication 6, **caractérisé en ce qu'**il est transformé en une phase organique par distillation azéotropique, en particulier par distillation azéotropique continue.

8. Microgel selon la revendication 7, **caractérisé en ce que** la distillation azéotropique est réalisée avec un entraîneur en présence d'un ou plusieurs solvants ayant un point élevé d'ébullition, le cas échéant à pression réduite.

9. Microgel selon l'une des revendications 7 et 8, **caractérisé en ce que** l'agent entraîneur est l'acétate butylique, le xylène, le pentanol, l'hexanol, l'hexanol éthylique, l'acétate butylique, la cétone méthylisobutylique ou la cétone méthylamylique.

10. Microgel selon l'une des revendications 8 et 9, **caractérisé en ce que** le solvant ayant un point élevé d'ébullition est l'acétate glycol-butylique ou l'acétate diglycol-butylique.

11. Procédé de fabrication d'un microgel se présentant en phase aqueuse selon l'une des revendications 1 à 3, **caractérisé en ce que** l'on polymérise en phase aqueuse un mélange monomère à base d'au moins un composé monofonctionnel éthylénique choisi parmi le groupe formé par le (méth)acrylate méthylique, le (méth)acrylate éthylique, le (méth)acrylate propylique, le (méth)acrylate butylique, le (méth)acrylate éthylhexylique, le (méth)-acrylate d'hydroxyéthyle, le (méth)acrylate d'hydroxypropyle, le (méth)acrylate d'hydroxybutyle, le (méth)acrylate d'hydroxyhexyle et les composés isomères desquels, styrène, styrène α-méthylique, toluène vinylique, naphtalène vinylique, l'acétate vinylique, les esters vinylique des acides gras synthétiques, et d'au moins un composé difonctionnel ou multifonctionnel éthylénique choisi parmi le groupe formé par les diacrylates, triacrylates et/ou les esters de l'acide (méth)acrylique des alcools polyfonctionnels, en présence d'un polyester sans groupes sulfuriques de l'acide adipique, l'acide phtalique, l'acide isophtalique, l'acide hexahydrophtalique, l'acide tétrahydrophtalique, l'acide trimellitique, l'acide diméthylol-propionique ou de leurs anhydrides potentiels et des acides gras dimères et un polyol choisi parmi le groupe formé par l'hexanediol-1,6, le néopentylglycol, le cyclohexanediméthylol-1,4, l'ester néopentylglycol de l'acide d'hydroxypivaline (HPN), le bisphénol A perhydraté, le triméthylolpropane.

12. Procédé de fabrication d'un microgel présent dans des solvants organiques selon l'une des revendications 4 à 10, **caractérisé en ce qu'**il comporte les étapes suivantes:
• Fabrication d'un microgel se présentant en phase aqueuse selon la revendication 11,
• Distillation azéotropique avec un entraîneur, le cas échéant en présence d'un ou plusieurs solvants ayant un point élevé d'ébullition et à pression réduite,
• Réutilisation de l'entraîneur séparé et de l'eau.

13. Utilisation d'un microgel selon l'une des revendications 1 à 3 pour les compositions de revêtement aqueuses ou contenant des dissolvants.

14. Utilisation d'un microgel selon la revendication 13 pour les laques de base aqueuses ou contenant des dissolvants, les laques de base pour effets ou les laques transparentes dans l'industrie automobile.
